**Europäisches Patentamt**

**European Patent Office**

**Office européen des brevets**

(19)

(11) Veröffentlichungsnummer: **0 124 726**
**A1**

(12) ## EUROPÄISCHE PATENTANMELDUNG

(21) Anmeldenummer: **84102787.3**

(22) Anmeldetag: **14.03.84**

(51) Int. Cl.³: **B 60 T 15/18**

(30) Priorität: **15.03.83 DE 3309238**

(43) Veröffentlichungstag der Anmeldung:
**14.11.84 Patentblatt 84/46**

(84) Benannte Vertragsstaaten:
**AT BE DE FR GB IT NL SE**

(71) Anmelder: Knorr-Bremse GmbH
Moosacher Strasse 80
D-8000 München 40(DE)

(72) Erfinder: Mrosek, Helmut
Chrisoph-von-Gluck-Platz 14
D-8000 München 40(DE)

(72) Erfinder: Reifinger, Günther
Kirchenstrasse 10a
D-8034 Germering(DE)

(54) Anhängersteuerventil.

(57) Bei einem Anhängersteuerventil, insbesondere für Zwei-leitungsbremsanlagen von Nutzfahrzeugen, ist der Steuer-kolben (Kolben 17) als Stufenkolben ausgebildet, welcher aus zwei Kunststoffteilen besteht. Diese können durch eine Schnappverbindung zusammengehalten werden. Die Voreil-richtung in Form eines federverspannten Voreilventils ist baulich im Steuerkolben integriert, derart, daß die Unterseite des Kolbens durch einen Druck beaufschlagbar ist, der um ungefähr den Betrag der Voreilung kleiner gehalten wird als der ausgesteuerte Druck am Bremsleitungsanschluß) Die Größe des Hubes des Voreilkolbens des Voreilventils ist mit-tels einer Einstellschraube (43) einstellbar; die Eins-tellschraube ist ohne Demontage des Ventilaufbaues einstell-bar, derart, daß die Höhe der Kraft der Feder (37) verändert werden kann, welche den Voreilkolben (35) in seine Schließ-position verspannt.

EP 0 124 726 A1

Croydon Printing Company Ltd

Knorr-Bremse GmbH
Moosacher Str. 80
8000 München 40

München, den 10.3.1983
TP1-hn/fe
- 1727 -

## Anhängersteuerventil

Die Erfindung betrifft ein Anhängersteuerventil nach dem Gattungsbegriff des Patentanspruches 1.

Bei Anhängersteuerventilen, insbesondere zweikreisig ansteuerbaren Anhängersteuerventilen mit einer Voreileinrichtung, sind Probleme des Zeitverhaltens der Ventileinrichtung vorhanden. Da die sogenannte Hysterese bei Voreilventilen von bekannten Konstruktionen von der Höhe der eingestellten Voreilung abhängig ist, kann dies bei einer gewünschten Voreilung von beispielsweise 1 bar eine negative Hysterese bis zu 1 bar bedeuten. Eine derartige Hysterese führt zu Störungen der Bremskraftverteilung eines Zuges, bestehend aus Zugfahrzeug und Anhänger.

Davon ausgehend besteht die Aufgabe der Erfindung darin, ein Anhängersteuerventil der in Rede stehenden Art auf baulich einfache Weise so auszugestalten, daß das zeitliche Ansprechverhalten verbessert wird. Es soll die Voreilung des Ventils in einem Bereich zwischen 0 - 0,5 bar einstellbar sein, ohne eine Demontage des Geräts am Fahrzeug vornehmen zu müssen. Die sogenannte Gesamthysterese des Ventiles soll maximal 0,2 bar betragen.

Zur Lösung dieser Aufgabe dienen die Merkmale nach dem Kennzeichnungsteil des Patentanspruches 1.

Das Anhängersteuerventil ist in baulich einfacher Weise so ausgelegt, daß das Ansprechverhalten der Voreileinrichtung sowohl bei Belüftung des Ventils als auch bei Entlüftung im wesentlich gleich, also frei von Hysterese ist. Diese vorteilhafte Wirkungsweise ist dadurch erzielt, daß der Steuerkolben des Anhängersteuerventils als Stufenkolben ausgebildet ist, wobei die Kolbenunterseite des Stufenkolbens durch einen Druck beaufschlagt wird, der um ungefähr den Betrag der Voreilung kleiner gehalten als der ausgesteuerte Druck an der Bremssteuerleitung für den Anhänger, unabhängig davon, ob das Anhängersteuerventil be- oder entlüftet wird.

Die Voreileinrichtung, d.h. das Voreilventil, welches als mittiges Bauteil des Steuerkolbens an der Unterseite desselben wirkend vorgesehen ist, kann durch einfache bau-liche Maßnahme hinsichtlich der Voreilwerte erstellt werden. Hierzu wird durch Verdrehen einer in einer Bohrung des Steuerkolbens geführten Einstellschraube die Spannkraft einer den Voreilkolben der Voreileinrichtung verspannenden Feder verstellt. Der Steuerkolben bildet zusammen mit einem an ihm einknüpfbaren, z.B. aus Kunststoff bestehenden Einsatz den Stufenkolben, dessen eine Teilfläche, d.h. die Teilfläche des Einsatzes, vom Druck der zum Anhänger führenden Bremssteuerleitung beaufschlagt ist, unabhängig davon, ob be- oder entlüftet wird.

Vorteilhafte Ausgestaltungen und Weiterbildungen sind im weiteren Patentansprüchen aufgeführt.

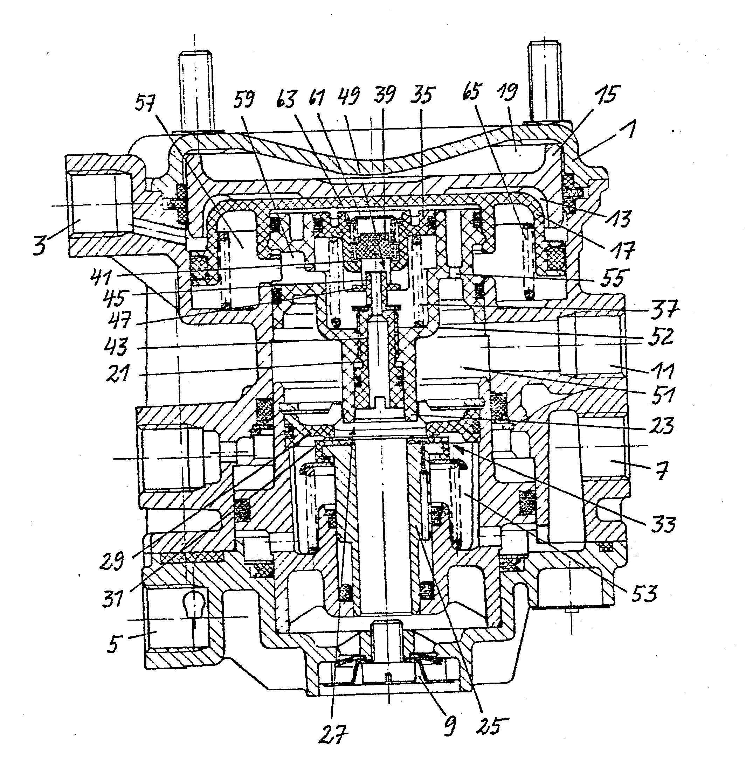

Die Erfindung ist nachfolgend anhand eines Ausführungsbeispieles unter Bezugnahme auf die beigefügte Zeichnung erläutert.

Die Zeichnung zeigt in Schnittdarstellung ein erfindungsgemäßes Anhängersteuerventil mit Voreileinrichtung.

Das in der Zeichnung dargestellte erfindungsgemäße Anhängersteuerventil mit Voreileinrichtung weist in einem Gehäuse 1 einen Steueranschluß 3 des ersten Bremskreises, einen Steueranschluß 5 des zweiten Bremskreises, einen mit einem Druckluftvorrat verbundenen Anschluß 7, einen Entlüftungsanschluß 9 und einen Anschluß 11 auf, welcher als Energieabfluß mit der Anhänger-Bremsleitung des Lastzuges in Verbindung steht.

Der Steueranschluß 3 steht mit einer Kammer 13 in Verbindung. Die Kammer 13 befindet sich zwischen einem Kolben 15 und einem darunter befindlichen Kolben 17. Die oberhalb des Kolbens 15 bestehende Kammer 19 ist über eine (nicht dargestellte) Verbindung mit dem Steueranschluß 5 des zweiten Bremskreises des Zugfahrzeuges verbunden. Der Kolben 17 trägt einen zum Beispiel an ihm eingeknöpften Einsatz 21, welcher an seinem gemäß Darstellung unteren Ende mit einem Fortsatz 23 versehen ist. Dieser wirkt mit einem an sich bekannten Doppelventilkörper 25 zusammen und bildet mit diesem einen in der Zeichnung geöffnet dargestellten Auslaß 27. Ein an einem feststehenden Gehäuseteil 29 ausgebildeter Ventilsitz 31 bildet mit dem Doppelventilkörper 25 einen in geschlossener Lage dargestellten Einlaß 33, welcher in geöffneter Lage und bei geschlossenem Auslaß 27 den an Vorrat angeschlossenen Anschluß 7 mit dem Anschluß 11, also mit dem Energieabfluß der Bremsleitung für den Anhänger verbindet.

Innerhalb des zusammen mit dem Kolben 17 bewegbaren Einsatzes 21 ist ein Voreilkolben 35 geführt, welcher unter der Verspannung einer Feder 37 steht. Die Feder 37 drückt den Voreilkolben gemäß Darstellung nach oben gerichtet. Der Voreilkolben trägt seinerseits einen federverspannten Ventilteller 39, welcher z.B. aus Kunststoff besteht und mit einem Ventilsitz des Voreilkolbens einen Einlaß 41 bildet. Die Größe des Hubes des Voreilkolbens und damit die Höhe der Federkraft der Feder 37 ist mit einer rohrförmigen Einstellschraube 43 einstellbar. Die Einstellschraube ist mit dem Einsatz 21 verschraubt und kann bei abgenommenem Entlüftungsanschluß 9 mittels eines durch den Doppelventilkörper 25 hindurchgeführten Werkzeuges verdreht und damit in Axialrichtung verstellt werden. Der Voreilkolben ist gemäß Darstellung verschiebbar auf einem rohrförmigen Fortsatz 45 der Einstellschraube geführt und kann sich hierbei an einen Anschlag 47 der Einstellschraube anlegen. Der hohl ausgebildete Fortsatz 45 bildet zusammen mit dem Ventilteller 39 einen Auslaß 49.

Die Wirkungsweise des Anhängersteuerventils ist wie folgt: Bei Betätigen des mit dem ersten und dem zweiten Bremskreis an die Steueranschlüsse 3 und 5 angeschlossenen Motorwagenbremsventils gelangt Druckluft über die vorgenannten Steueranschlüsse in die Kammern 13 und 19, welche oberhalb der Kolben 17 und 15 bestehen. Während der Kolben 15 infolge im wesentlichen gleicher Druckbeaufschlagung auf seinen beiden Seiten in seiner dargestellten Lage verbleibt, wird der Kolben 17 nach unten gerichtet verschoben, so daß sich der Fortsatz 23 des Kolbens 17 an das Dichtelement des Doppelventilkörpers 25 anlegt und der Auslaß 27 geschlossen wird. Bei weiterer, nach unten gerichteter Bewegung des Fortsatzes hebt dieser den unter Federverspannung an den Ventilsitz 31 angelegten Doppelventilkörper vom Ventilsitz ab, d.h., daß der Einlaß 33 geöffnet wird. Der mit dem Anschluß 11 verbundene Raum, welcher zuvor über den hohlen Doppelventilkörper 25 und den Entlüftungsanschluß 9 entlüftet war, steht nunmehr mit dem Raum 53 in Verbindung, welcher gemäß Darstellung mit dem Anschluß 7 verbunden ist. Druckluft strömt somit vom Anschluß 7 in den Raum 53 und durch den geöffneten Einlaß 33 in den Raum 51. Von dort gelangt die Druckluft

0124726

in die Anhängerbremsleitung, so daß die Abbremsung im Anhänger eingeleitet wird. Gleichzeitig beaufschlagt die Druckluft im Raum 51 die Teilfläche 52 an der Unterseite des Einsatzes 21. Die die Bohrung 55 im Einsatz 21 passierende Druckluft wirkt auch auf den Voreilkolben 35 ein und bewegt diesen gegen die Kraft der Feder 37 gerichtet nach unten. Die Größe des Hubes und damit die Größe der Federkraft ist mit der Einstellschraube 43, wie vorstehend dargelegt, einstellbar. Bei Abwärtsbewegung des Voreilkolbens schließt der in ihm unter Federverspannung geführte Ventilteller den Auslaß 49, über den der Raum 57 unterhalb des Kolbens 17 entlüftet wurde. Diese Entlüftung (in der Zeichnung dargestellt) erfolgt hierbei über die hohle Einstellschraube 43, den hohlen Doppelventilkörper 25 und den Entlüftungsanschluß 9. Durch Abheben des Ventiltellers 39 vom Voreilkolben 35 wird gleichzeitig der Einlaß 41 geöffnet. Das Halteelement 61, an welchem sich die den Ventilteller 39 verspannende Feder 63 abstützt, ist gegenüber dem Voreilkolben 35 ohne Abdichtung gehalten, d.h. daß die Druckluft oberhalb des Voreilkolbens 35, den geöffneten Einlaß 41 passierend, in die Bohrung 59 und von dort in den Raum 57 unterhalb des Kolbens 17 gelangt. Die Druckluft wirkt demnach auf der Unterseite des Kolbens 17 und versucht, diesen nach oben gerichtet zu verschieben. Wenn Kräftegleichgewicht am Voreilkolben 35 erreicht ist, bewegt sich dieser wieder nach oben und der Einlaß 41 wird geschlossen; dies ist die Abschlußstellung. Der Kolben 17 wird durch die Drücke in den Räumen 51 und 57 ebenfalls wieder nach oben bewegt, so daß der Einlaß 33 schließt; dies ist die Abschlußstellung.

Beim Lösen der Bremse werden die Steueranschlüsse 3 und 5 über das Betriebsbremsventil entlüftet. Der Kolben 17 mit dem an ihm eingeknüpften oder auf andere Weise befestigten Einsatz 21 wird durch den an seiner Unterseite noch wirksamen Druck und durch die Kraft der Druckfeder 65 bis auf Anschlag nach oben verschoben, wodurch der Auslaß 27 öffnet; die Luft aus der Bremsleitung (Anschluß 11) kann sich über den Entlüftungsanschluß 9 abbauen. Die Druckluft aus dem Raum 57 wird über den nunmehr geöffneten Auslaß 49, die hohle Einstellschraube 43 und den Entlüftungsanschluß 9 gleichfalls in die Atmosphäre abgeleitet. Hierdurch wird der in der Zeichnung dargestellte Zustand erreicht.

0124726

Knorr-Bremse GmbH
Moosacher Str. 80
8000 München 40

München, den 10.3.1983
TP1-hn/fe
1727

## Bezugszeichenliste

| | | | |
|---|---|---|---|
| 1 | Gehäuse | 53 | Raum |
| 3 | Steueranschluß | 55 | Bohrung |
| 5 | Steueranschluß | 57 | Raum |
| 7 | Anschluß | 59 | Bohrung |
| 9 | Entlüftungsanschluß | 61 | Halteelement |
| 11 | Anschluß | 63 | Feder |
| 13 | Kammer | 65 | Druckfeder |
| 15 | Kolben | | |
| 17 | Kolben | | |
| 19 | Kammer | | |
| 21 | Einsatz | | |
| 23 | Fortsatz | | |
| 25 | Doppelventilkörper | | |
| 27 | Auslaß | | |
| 29 | Gehäuseteil | | |
| 31 | Ventilsitz | | |
| 33 | Einlaß | | |
| 35 | Voreilkolben | | |
| 37 | Feder | | |
| 39 | Federteller | | |
| 41 | Einlaß | | |
| 43 | Einstellschraube | | |
| 45 | Fortsatz | | |
| 47 | Anschlag | | |
| 49 | Auslaß | | |
| 51 | Raum | | |
| 52 | Teilfläche | | |

Knorr-Bremse GmbH
Moosacher Str.80
8000 München 40

München, den 10.3.83
TP1-hn/fe
- 1727 -

P a t e n t a n s p r ü c h e

1. Anhängersteuerventil mit Voreileinrichtung, insbesondere für Zweileitungsbremsanlagen von Nutzfahrzeugen, mit einem im Ventilgehäuse des Anhängersteuerventils angeordneten, durch einen Steuerdruck beaufschlagbaren Steuerkolben, wobei die Voreileinrichtung derart wirksam ist, daß sie durch zeitlich verzögerte Beaufschlagung des Steuerkolbens eine Druckvoreilung des ausgesteuerten Druckes gegenüber dem eingegebenen Steuerdruck hervorzurufen vermag, dadurch gekennzeichnet, daß der Steuerkolben (Kolben 17) als Stufenkolben ausgebildet ist, dessen eine Teilfläche ständig dem ausgesteuerten Druck ausgesetzt ist, und daß die Voreileinrichtung im Steuerkolben baulich integriert und mit diesem bewegbar ist.

2. Anhängersteuerventil nach Anspruch 1, dadurch gekennzeichnet, daß die Voreileinrichtung in Form eines durch eine Feder (37) verspannten Voreilventils in einem vorzugsweise aus Kunststoff gefertigten Einsatz (21) des Stufenkolbens geführt ist, wobei die Unterseite des Einsatzes (21) als die ständig dem ausgesteuerten Druck ausgesetzte Teilfläche besteht.

3. Anhängersteuerventil nach Anspruch 2, gekennzeichnet durch einen im Einsatz (21) verschiebbar geführten Voreilkolben (35) mit einem in einer Bohrung desselben durch eine Feder (63) in Richtung der Verschlußlage verspannten Ventilteller (39)      , welcher durch den ausgesteuerten Druck des Anhängersteuerventils gleichfalls in Verschlußlage wirkend beaufschlagbar ist, und eine im Einsatz
positionsveränderlich gehaltene Einstellschraube (43) ,
welche bei Relativbewegung des Voreilkolbens (35) gegen
den Ventilteller anschlagend diesen aus seiner Verschlußlage abzuheben vermag, derart, daß der ausgesteuerte Druck
nach Passieren des Voreilventils als Gegendruck zum eingesteuerten Druck auf den Steuerkolben (Kolben 17   ) einwirkt.

4. Anhängersteuerventil nach Anspruch 3, dadurch gekennzeichnet, daß die Einstellschraube (43) hohl ausgebildet
ist und in freier Verbindung mit dem Entlüftungsanschluß (9)
des Anhängersteuerventils steht, und daß der Ventilteller
bei Anlage am zugewandten Ende der Einstellschraube die
zum Entlüftungsanschluß führende Verbindung sperrt.

5. Anhängersteuerventil nach einem oder vorangehenden
Ansprüche, dadurch gekennzeichnet, daß der Voreilkolben
(35) durch die dem ausgesteuerten Druck entgegenwirkende
Feder (37) in Richtung der die Entlüftungsverbindung freigebenden Position verspannt ist, und daß die Relativlage
zwischen dem Voreilkolben und der Einstellschraube (43)
durch Verdrehen derselben im Einsatz (21) veränderbar ist.

6. Anhängersteuerventil nach einem der vorangehenden Ansprüchen, dadurch gekennzeichnet, daß dieses über den
Steueranschluß des ersten Kreises des Betriebsbremsventils,
über den Steueranschluß des zweiten Kreises des Betriebsbremsventils oder über den Steueranschluß des Handbremsventils steuerbar ist.

Europäisches
Patentamt

**EUROPÄISCHER RECHERCHENBERICHT**

0124726

Nummer der Anmeldung

EP 84 10 2787

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| P,X | EP-A-0 090 908 (WABCO WESTINGHOUSE) <br> * Ganzes Dokument * | 1-5 | B 60 T 15/18 |
| X | DE-B-1 963 879 (WABCO WESTINGHOUSE) <br> * Spalte 3, Zeile 55 - Spalte 4, Zeile 40; Figur 2 * | 1,2,6 | |
| A | DE-A-2 246 242 (BOSCH) <br> * Seite 4, Zeile 23 - Seite 6, Zeile 5; Figuren 1, 2 * | 1,2,4 | |
| A | DE-A-2 246 236 (BOSCH) | | |

| RECHERCHIERTE SACHGEBIETE (Int. Cl. ³) |
|---|
| B 60 T 15/00 |

Der vorliegende Recherchenbericht wurde für alle Patentansprüche erstellt.

| Recherchenort <br> BERLIN | Abschlußdatum der Recherche <br> 04-06-1984 | Prüfer <br> LUDWIG H J |
|---|---|---|